# EUROPÄISCHE PATENTANMELDUNG

(11) **EP 3 180 987 A1**
(43) Veröffentlichungstag der Anmeldung: **21.06.2017**
(21) Anmeldenummer: 16154586.8
(22) Anmeldetag: 06.02.2016
(51) Int. Cl.: A23C 21/08, A23J 3/08, A23J 3/14, A23J 3/16, A23J 3/22, A23J 3/26, A23P 30/00

(54) **TEXTURIERTE MILCHPROTEINE**

(30) Priorität: 18.12.2015 EP 15201234
(71) Anmelder: DMK Deutsches Milchkontor GmbH, 27404 Zeven (DE)
(72) Erfinder: Dieker, Veronika, 26129 Oldenburg (DE); Buchholz, Anne, 40124 Georgsmarienhütte (DE); Zink, Ralf, 26160 Bad Zwischenahn (DE); Knoch, Achim, 32427 Minden (DE); Pernutz, Christoph, 49596 Gehrde (DE)
(74) Vertreter: Fabry, Bernd

(57) **Zusammenfassung**

Vorgeschlagen werden texturierte Milchproteine (TDP), die dadurch erhältlich sind, dass man
(a) eine Mischung enthaltend oder bestehend aus
(a1) Milchproteinen und
(a2) einem Fasermaterial und/oder Pflanzenprotein
bereitstellt;

(b) die Mischung in Gegenwart von Wasser oder Molke unter autogenem Druck und unter Anlegen eines Temperaturgradienten von etwa 20 bis etwa 200 °C extrudiert und
(c) das Extrudat anschließend entspannt.

## Beschreibung

### GEBIET DER ERFINDUNG

Die Erfindung befindet sich auf dem Nahrungsmittelsektor und betrifft neue Proteinprodukte auf Milchbasis, die sich durch spezielle Texturen auszeichnen.

### STAND DER TECHNIK

Einer Studie der WTO aus dem Jahre 2012 zur Folge, wird sich der Welternährungsbedarf in den nächsten 25 Jahren mindestens verdoppeln. Dieser Herausforderung ist nur mit nachhaltiger Landwirtschaft und dem Erschließen neuer Nahrungsquellen zu begegnen. Ein großes Potential für die Erzeugung lebenswichtiger Grundbausteine der Ernährung ist die Milch, die sich insbesondere durch einen hohen Proteinanteil auszeichnet. Milch- und Molkenproteinkonzentrate spielen beispielsweise heute schon eine wichtige Rolle in der Kleinkindernährung und zeichnen sich gegenüber pflanzlichen Proteinen dadurch aus, dass sie alle essentiellen Aminosäuren in für die Ernährung ausreichender Menge enthalten.

Es liegt andererseits auf der Hand, dass Proteine, die aus Milch gewonnen werden und in Form eines weißen eher geschmacklosen Pulvers anfallen, wenig attraktive Produkte darstellen, die es schwer haben, Gunst und Aufmerksamkeit des Verbrauchers zu gewinnen. Es besteht daher das Bedürfnis, die Proteine in einer solchen Art weiterzuverarbeiten, dass sie eine Textur aufweisen, die anderen, dem Verbraucher bekannten und genehmen Nahrungsmitteln, gleich oder zumindest ähnlich kommt, wie zum Beispiel Geflügel, Fisch, Gemüse, Pilzen, Tofu oder auch Erdnussflips. Aus dem Stand der Technik sind entsprechende Ansätze grundsätzlich bekannt:

Aus der internationalen Patentanmeldung WO 2006 130025 A1 (FONTERRA) ist ein Verfahren zur Herstellung von extrudierten Milchproteinen für den Einsatz in Snackprodukten bekannt, bei dem als Einsatzstoffe Milchproteine und Stärken verwendet werden.

Auch aus der internationalen Patentanmeldung WO 2012 036910 A1 (FRITO LAY) sind Snackprodukte bekannt, bei dem man Milchproteine in Gegenwart von Calciumcarbonat unter Druck bearbeitet und dann kontrolliert expandiert.

In der EP 1059040 B1 (BONGRAIN) wird ein texturiertes Produkt beschrieben, das bei der Extrusion von Milch oder Käse erhalten wird.

Gegenstand des Patentes US 6,607,777 B1 (UNIV UTAH) sind Milchproteine mit fleischähnlicher Textur, die durch Extrusion unter Druck und anschließendes Entspannen erhalten werden.

In der US 8,642,109 B2 (SOLAE) werden Sojaprotein-Nuggets beansprucht, die durch gemeinsame Extrusion von Sojaproteinen und Kohlenhydraten erhalten werden.

Nachteilig ist jedoch, dass die Verfahren nur stets eine Textur ermöglichen und diese eher amorph ist und den Verbraucher eben nicht an die eingangs bekannten Nahrungsmittel erinnert. Damit ist vorprogrammiert, dass diese Produkte nur ein beschränktes Marktinteresse finden.

Aufgabe der vorliegenden Erfindung hat daher darin bestanden, Milchproteine in einer solchen Weise zu verarbeiten, dass dabei Produkte entstehen, die in ihrer Textur je nach Prozessbedingungen an Geflügel, Fisch, Gemüse, Pilze, Tofu oder auch Erdnussflips erinnern. Das Verfahren sollte dabei so variabel sein, dass die Textur über die Prozessbedingungen gesteuert werden kann, man also durch geringfügige Änderung in Druck, Temperatur, Verweilzeit und dergleichen ganz unterschiedliche Produkte im gleichen Bauteil herstellen kann, ohne dazu das Verfahren selbst ändern zu müssen.

### BESCHREIBUNG DER ERFINDUNG

Ein erster Gegenstand der Erfindung betrifft texturierte Milchproteine, nachfolgend auch als "Texturized Dairy Proteins" (TDP) bezeichnet, die dadurch erhältlich sind, dass man
(a) eine Mischung enthaltend oder bestehend aus
   (a1) Milchproteinen und
   (a2) einem Fasermaterial und/oder Pflanzenprotein
   bereitstellt;
(b) die Mischung in Gegenwart von Wasser oder Molke unter autogenem Druck und unter Anlegen eines Temperaturgradienten von etwa 20 bis etwa 200 °C extrudiert und
(c) das Extrudat anschließend entspannt.

Ein weiterer Gegenstand der Erfindung betrifft ein analoges Verfahren zur Herstellung texturierter Milchproteine (TDP), umfassend die folgenden Schritte:
(a) Bereitstellen einer Mischung enthaltend oder bestehend aus
   (a1) Milchproteinen und
   (a2) einem Fasermaterial und/oder Pflanzenprotein
(b) Extrusion der Mischung in Gegenwart von Wasser oder Molke unter autogenem Druck und unter Anlegen eines Temperaturgradienten von etwa 20 bis etwa 200 °C, und
(c) Entspannen des Extrudats.

Überraschenderweise wurde gefunden, dass sich Milchproteine zusammen mit Pflanzenproteinen und/oder Fasermaterialien zu Extrudaten verarbeiten lassen, die je nach Extrusionsbedingungen und nachfolgenden Kühl- und Verarbeitungsschritten die unterschiedlichsten Texturen aufweisen.

### EINSATZSTOFFE

Als primäre Einsatzstoffe (Komponente a1) für die TDP kommen Milchproteine, speziell Molkenproteine (Konzentrate, Isolate, Hydrolysate) und Caseinfraktionen in Betracht.

Molkenproteine, auch englisch Whey Protein genannt, und Casein stellen die beiden wichtigen Proteinfraktionen der Milch von Säugetieren dar. Der Proteinanteil der Kuhmilch von circa 3,3 % setzt sich dabei aus ca. 2,7 % Casein und ca. 0,6 % Molkenprotein zusammen. Die Bezeichnung Molkenprotein wird aus dem Umstand abgeleitet, dass die Proteine dieser Fraktion Hauptbestandteil der Proteine in Molke sind. Molkenproteine sind eine Gruppe verschiedener Albumine und Globuline. Im Einzelnen sind dies:
- alpha-Lactalbumin ca. 20 % (0,1 % der Milch)
- beta-Lactoglobulin ca. 45 % (0,25 % in der Milch)
- Immunoglobuline ca. 10 %
- Proteosepepton ca. 20 %
- Serumalbumin ca. 5 %

Molkenproteine sind hitzeempfindlich. Beim Aufkochen von Milch ist insbesondere das β-Lactoglobulin für die Haut auf der Oberfläche verantwortlich. Molkenproteine weisen auch einen hohen Gehalt an verzweigtkettigen Aminosäuren auf, wie etwa 20-25 % der meisten Nahrungsproteine. Molkenproteine werden als ernährungsphysiologisch hochwertig eingestuft (hohe biologische Wertigkeit). Sie sind daher Hauptbestandteil der molkenbasierten Eiweißpulver zum Muskelaufbau.

Die einfachste Form des Molkenproteins liegt als Molkenprotein-Konzentrat vor. Es wird hauptsächlich per Ultrafiltration hergestellt. Es besitzt einen höheren Proteingehalt von etwa 70 bis 80 %. Aufgrund der einfachen Herstellung des Rohstoffes in den Molkereien ist es wesentlich günstiger als Molkenprotein-Isolat und -Hydrolysat. Daher wird es von den Nahrungsergänzungsmittel-Anbietern bei der Herstellung ihrer Produkte als erste Wahl angesehen. Aufgrund eines Kohlenhydratanteils von etwa 6 bis 8 % und eines Fettanteils von etwa 4 bis 7 Gew.-% ist der Proteingehalt etwas niedriger als beim Isolat.

Bei der Herstellung von Molkenprotein-Isolat kommen zwei unterschiedliche Verfahren zur Anwendung. Beim lonenaustauschverfahren werden die Molkenproteine an den Ionenaustauscher adsorbiert und eluiert, wodurch die Proteinpräparationen mehr Salze enthalten. Bei einer Herstellung von Molkenprotein-Isolat im Mikrofiltrationsverfahren werden keine Salze verwendet. Dadurch kann eine besonders hohe Reinheit erreicht werden, mit einem Proteinanteil von etwa 90 bis 96 % sowie einem geringen Fett- und Laktosegehalt von weniger als ein Prozent. Des Weiteren ist Molkenprotein-Isolat aufgrund seiner praktischen Laktosefreiheit besonders für Personen mit Laktoseintoleranz geeignet.

Bei der Herstellung von Molkenprotein-Hydrolysat wird das Hydrolyse-Verfahren angewendet. Durch die Hydrolyse (Aufspaltung) der Proteinketten in kleinste Fragmente (Peptide) kann Molkenprotein-Hydrolysat vom Körper schneller resorbiert werden. Je höher der Hydrolysegrad, desto hochwertiger und teurer das Protein. Als Nachteil ist der bittere Geschmack zu nennen. Molkenprotein-Hydrolysat findet deshalb seine Anwendung hauptsächlich in Aminosäurentabletten und -kapseln, wo der bittere Geschmack nur eine untergeordnete Rolle spielt. In geringen Anteilen werden Molkenprotein-Hydrolysate Mischungen verschiedener hochwertiger Proteine (Mehrkomponenten-Proteine) beigegeben.

Casein stellt ebenfalls eine Mischung aus mehreren Proteinen (αS1-, αS2-, β-, κ-Casein) dar und dient dem Speicher und Transport von Protein, Calcium und Phosphat zum Neugeborenen. Casein bildet in der Milch zusammen mit Calciumphosphat und anderen Bestandteilen Micellen. Typische Beispiele für geeignetes Casein umfassen sowohl Caseine, die durch Säurebehandlung gewonnen werden, als auch micellares Casein aus der Mikrofiltration von Magermilch.

Im Zuge der Erfindung wurde die Feststellung gemacht, dass es für die Texturierung der Endprodukte entscheidend ist, dass die Extrusion zusammen mit Pflanzenproteinen erfolgt, die den Produkten eine Textur verleiht, wie sie dem Empfinden nach für Geflügel, Fisch, Pilze, Tofu oder auch Erdnussflips typisch ist. Darüber hinaus kann sich die Zugabe von pflanzlichen Fasern als vorteilhaft für die Produkttextur erweisen. Solche Fasermaterialien können Bestandteil von pflanzlichen Proteinkonzentraten sein. Alternativ werden Fasern separat als Rohstoff zugegeben (z. B. bei Verwendung von Pflanzenproteinisolaten). Die Faltung der Eiweißstruktur dieser pflanzlichen Proteine hat sich darüber hinaus ebenfalls als sehr vorteilhaft erwiesen, wenn es darum geht, den Produkten eine Textur zu verleihen.

Üblicherweise wird die Komponente (a2) in einem Anteil von etwa 1 bis etwa 75 Gew.-%, vorzugsweise etwa 10 bis etwa 60 Gew.-% und insbesondere etwa 25 bis etwa 50 Gew.-% bezogen auf die Gesamtmenge der Komponenten (a1) und (a2) eingesetzt.

### EXTRUSION UND FORMGEBUNG

Die Extrusion der Protein/Fasermischungen macht die Mitverwendung von Wasser unverzichtbar. Dabei unterscheidet man zwischen so genannten "low moisture" und "high moisture" Verfahren.

### Low moisture Verfahren

Im ersten Fall werden die Mischungen in Gegenwart von etwa 10 bis etwa 50 Gew.-% und insbesondere etwa 20 bis etwa 40 Gew.-% Wasser oder Molke - bezogen auf die Gesamtmenge der eingesetzten Rohstoffe, d. h. Menge der Komponenten (a1+a2) und Wasser bzw. Molke - extrudiert. Die Extrusion erfolgt unter Druck, der sich insbesondere aus den Parametern Drehzahl und Temperatur ergibt und sich auf etwa 30 bis 100 bar einstellt. Die Extrusion wird vorzugsweise in einem Doppelschneckenextruder durchgeführt, der über gleichlaufende scherintensive Schnecken verfügt. Die Extrusion findet zudem unter Anlegung eines Temperaturgradienten von etwa 20 bis etwa 200 °C und insbesondere etwa 40 bis etwa 170 °C statt. Darunter ist zu verstehen, dass der Extruder, der über einen außen liegenden Heiz-/Kühlmantel und über eine Reihe von separat zu steuernden Temperaturzonen verfügt, im vorderen Bereich eine niedrigere Temperatur als im hinteren Teil aufweist. Je nach Anlage sind Drehzahlen von etwa 200 bis etwa 2.000 Upm einzustellen.

Eine typische Verarbeitungsweise von Produkten nach dem low moisture Verfahren besteht darin, diese nach Verlassen des Extruders in einem Schritt auf Normaldruck zu entspannen und die resultierende Masse in eine stückige Form zu bringen. Unmittelbar beim Verlassen des Extruders weist das Produkt noch eine Temperatur von etwa 120 bis etwa 140 °C auf, was dazu führt, dass das Wasser bzw. der Wasseranteil der Molke fast vollständig verdampft. Das Produkt bläht auf und nimmt eine Textur an, die man am ehesten mit der von Erdnussflips vergleichen kann. Die Verarbeitung der Masse kann durch eine formgebende Düse und anschließender Schneidvorrichtung erfolgen. Die Produkte zeichnen sich gegenüber stärkebasierten Extrudaten dadurch aus, dass sie nach Einlegen in Wasser formstabil bleiben. Gegebenenfalls ist eine Nachbehandlung der durch das beschriebene Verfahren erzeugten Produkte in Form einer Nachtrocknung vorzunehmen.

### High moisture Verfahren

Im zweiten Fall werden die Mischungen in Gegenwart von etwa 50 bis etwa 75 Gew.-% und insbesondere etwa 55 bis etwa 60 Gew.-% Wasser oder Molke - bezogen auf die Gesamtmenge der eingesetzten Rohstoffe, d. h. Menge der Komponenten (a1+a2) und Wasser bzw. Molke - extrudiert. Die Extrusion erfolgt wieder unter autogenem Druck, der sich anlagenspezifisch auf etwa 10 bis 40 bar einstellt. Die Extrusion wird auch bei dieser Variante vorzugsweise in einem Doppelschneckenextruder durchgeführt, der über gleichlaufende scherintensive Schnecken verfügt. Die Extrusion findet zudem unter Anlegung eines Temperaturgradienten von ebenfalls etwa 20 bis etwa 200 °C und insbesondere etwa 40 bis etwa 170 °C statt. Da die Produkte einen höheren Wasseranteil aufweisen, liegt die Viskosität während der Verarbeitung niedriger als beim low-moisture Verfahren. Je nach Anlage sind Drehzahlen von etwa 200 bis etwa 2.000 Upm einzustellen.

Die Extrusion kann anstelle von Wasser auch mit Molke oder einer Mischung aus Wasser und Molke durchgeführt werden.

Im einfachsten Fall kann die Weiterverarbeitung der high moisture Produkte dadurch erfolgen, dass man diese in ein Kühlbad entspannt.

Vorzugsweise werden die Mischungen jedoch nach Verlassen des Extruders unter Beibehaltung des Druckes in einen Kühlkanal geleitet, sodass erst auf diese Weise die gekühlte Masse bei Normaldruck austritt. Unter einem Kühlkanal ist ein einfaches Bauteil zu verstehen, das z. B. aus einem Rohr mit einem gekühlten Außenmantel besteht. Die Extrusionsmasse wird an einem Ende eindosiert und verlässt den Kühlkanal am anderen Ende und wird dabei auf Umgebungsdruck gebracht. Typischerweise weist der Kühlkanal über seine ganze Länge einen konstanten Querschnitt auf. Länge und Querschnitt des Kühlkanals sind abhängig von der Extrudergröße und dem daraus resultierenden Produktdurchsatz. Der Einsatz eines Kühlkanals ist für den Aufbau mancher Texturen mitentscheidend, denn durch das Fördern der Extrusionsmischung durch das Rohr erfolgt eine Kühlung von außen in das Innere der Masse, was den Aufbau von Schichten unterstützt.

Die gekühlte Masse weist beim Austritt noch eine Temperatur von etwa 50 bis 80 °C auf und wird anschließend in stückige Form gebracht, beispielsweise indem man den Texturatstrang mit Messern portioniert. Anschließend empfiehlt sich zur weiteren Texturierung, die Massen mindestens einer der beiden folgenden Maßnahmen zu unterwerfen.
(i) Tiefkühlung und Auftauen und/oder
(ii) Kochen in Brühe.

Beide Maßnahmen dienen dazu, die Struktur zu lockern.

### GEWERBLICHE ANWENDBARKEIT

Ein weiterer Gegenstand der Erfindung betrifft die Verwendung der texturierten Milchproteine nach Anspruch 1 oder der Verfahrensprodukte nach mindestens einem der Ansprüche 2 bis 17 als Nahrungsersatzstoffe, beispielsweise für Fleisch, Fisch, Gemüse, Pilze oder Tofu.

### BEISPIELE

### BEISPIEL 1

72 Gew.-% einer Trockenmischung bestehend aus 32 Gew.-% Casein (Säurecasein, mind. 95 % Protein i. Tr.) und 68 Gew.-% Sojaproteinkonzentrat (mind. 67 % Protein i. Tr.) wurde mit 28 Gew.-% Wasser auf einen Doppelschneckenextruder aufgegeben, dessen Mantel mit 10 Heizzonen versehen war, an die ein Temperaturgradient von 40 auf 170 °C angelegt war. Die Mischung wurde mit einer Drehzahl von 1.300 Upm gefördert, wobei sich im Extruder ein Druck von etwa 75 bar aufbaute. Die noch etwa 130 °C heiße und plastische Masse wurde aus dem Extruder gefördert und sofort über eine Lochplatte (Bohrung von 4 mm Durchmesser) und rotierende Messer geführt und in stückige Form gebracht. Dabei entspannte das Produkt auf Umgebungsdruck, wobei das Wasser bis auf eine geringe Restfeuchte verdampfte und die resultierende Masse stark aufblähte. Der Durchsatz betrug ca. 50 kg/ h. Es wurde eine Erdnussflip-artige Proteintextur erhalten, die sich durch Form- und Texturstabilität in Wasser auszeichnete.

### BEISPIEL 2

40 Gew.-% einer Trockenmischung bestehend aus 72 Gew.-% eines Molkenproteinkonzentrats (mind. 80 % Protein i. Tr.) sowie 20 Gew.-% Erbsenproteinisolat (mind. 84 % Protein i. Tr.), 4 Gew.-% Erbsenfasern und 4 Gew.-% Kartoffelstärke wurden mit 60 Gew.-% Wasser auf einen Doppelschneckenextruder aufgegeben, dessen Mantel mit 10 Heizzonen versehen war, an die ein Temperaturgradient von 40 auf 180 °C angelegt war. Die Mischung wurde mit einer Drehzahl von 600 Upm gefördert, wobei sich im Extruder ein Druck von etwa 25 bar aufbaute. Die extrudierte Masse wurde kontinuierlich mit einem Durchsatz von ca. 12 kg/ h aus dem Extruder gefördert und auf Umgebungsdruck in ein Kühlbad entspannt.

### BEISPIEL 3

45 Gew.-% einer Trockenmischung bestehend aus 72 Gew.-% eines Molkenproteinkonzentrats (mind. 80 % Protein i. Tr.) sowie 14 Gew.-% Sojaproteinkonzentrat (mind. 67 % Protein i. Tr.) und 14 Gew.-% Erbsenproteinisolat (mind. 84 % Protein i. Tr.) wurden mit 55 Gew.-% Wasser auf einen Doppelschneckenextruder aufgegeben, dessen Mantel mit 10 Heizzonen versehen war, an die ein Temperaturgradient im Bereich von 20 bis 200 °C angelegt war. Die Mischung wurde mit einer Drehzahl von etwa 1.500 Upm gefördert, wobei sich im Extruder ein Druck von etwa 15 bis 25 bar aufbaute. Das Produkt wurde ohne Entspannung in einen Kühlkanal gefördert, der mit einem Kühlmantel umgeben war. Beim Kühlkanal handelte es sich um ein 3 m langes Bauteil mit einem rechteckigen Querschnitt (Höhe: 1,5 cm; Breite 15 cm). Die Temperatur des Kühlmantels wurde über ein separates Kühlaggregat auf 30 °C eingestellt. Die extrudierte Masse wurde kontinuierlich mit einem Durchsatz von ca. 100 kg/ h aus dem Kühlkanal gefördert und auf Umgebungsdruck entspannt. Der 70 °C warme Pressstrang wurde mit Messern portioniert und diese dann sofort auf -18 °C tiefgefroren. Nach dem Auftauen ergaben sich in Abhängigkeit von den Extrusionsbedingungen Proteinmassen mit unterschiedlichen Texturen, wie dies in der nachfolgenden **Tabelle 1** wiedergegeben ist:

**Tabelle 1**

| Proteintexturen | | | | |
|---|---|---|---|---|
| **Versuch** | **Temperaturgradient [°C]** | **Druck [bar]** | **Drehzahl [Upm]** | **Textur** |
| 3.1 | 40 bis 130 | 24 | 1.500 | Offene, lockere Struktur |
| 3.2 | 40 bis 150 | 28 | 1.500 | Kompakte, feste Struktur |

## Patentansprüche

1. Texturierte Milchproteine (TDP), dadurch erhältlich, dass man
(a) eine Mischung enthaltend oder bestehend aus
(a1) Milchproteinen und
(a2) einem Fasermaterial und/oder Pflanzenprotein
bereitstellt;
(b) die Mischung in Gegenwart von Wasser oder Molke unter autogenem Druck und unter Anlegen eines Temperaturgradienten von etwa 20 bis etwa 200 °C extrudiert und
(c) das Extrudat anschließend entspannt.

2. Verfahren zur Herstellung texturierter Milchproteine (TDP), umfassend die folgenden Schritte:
(a) Bereitstellen einer Mischung enthaltend oder bestehend aus
(a1) Milchproteinen und
(a2) einem Fasermaterial und/oder Pflanzenprotein
(b) Extrusion der Mischung in Gegenwart von Wasser oder Molke unter autogenem Druck und unter Anlegen eines Temperaturgradienten von etwa 20 bis etwa 200 °C, und
(c) Entspannen des Extrudats.

3. Verfahren nach Anspruch 2, **dadurch gekennzeichnet, dass** man als Komponente (a1) Milchproteine, Molkenproteine und/oder Casein einsetzt.

4. Verfahren nach den Ansprüchen 2 und/oder 3, **dadurch gekennzeichnet, dass** man als Komponente (a2) pflanzliche Proteine und/oder Fasermaterial einsetzt.

5. Verfahren nach mindestens einem der Ansprüche 2 bis 4, **dadurch gekennzeichnet, dass** man Komponente (a2) in einem Anteil von etwa 1 bis etwa 75 Gew.-% bezogen auf die Gesamtmenge der Komponenten (a1) und (a2) einsetzt.

6. Verfahren nach mindestens einem der Ansprüche 2 bis 5, **dadurch gekennzeichnet, dass** man die Mischung in Gegenwart von etwa 10 bis etwa 50 Gew.-% Wasser oder Molke - bezogen auf die Gesamtmenge der eingesetzten Rohstoffe, d. h. Menge der Komponenten (a1+a2) und Wasser bzw. Molke-extrudiert.

7. Verfahren nach Anspruch 6, **dadurch gekennzeichnet, dass** man die Mischung bei einem autogenen Druck von etwa 30 bis 100 bar extrudiert.

8. Verfahren nach den Ansprüchen 6 und/oder 7, **dadurch gekennzeichnet, dass** man die Mischung unter Anlegung eines Temperaturgradienten von etwa 40 bis etwa 170°C extrudiert.

9. Verfahren nach mindestens einem der Ansprüche 6 bis 8, **dadurch gekennzeichnet, dass** man die Mischung mit einer Drehzahl im Bereich von etwa 200 bis etwa 2.000 Upm extrudiert.

10. Verfahren nach mindestens einem der Ansprüche 6 bis 9, **dadurch gekennzeichnet, dass** man die Mischung nach Verlassen des Extruders in einem Schritt auf Normaldruck entspannt und die resultierende Masse in eine stückige Form bringt.

11. Verfahren nach mindestens einem der Ansprüche 2 bis 5, **dadurch gekennzeichnet, dass** man die Mischung in Gegenwart von etwa 50 bis etwa 75 Gew.-% Wasser und/oder Molke - bezogen auf die Gesamtmenge der eingesetzten Rohstoffe, d. h. Menge der Komponenten (a1+a2) und Wasser bzw. Molke - extrudiert.

12. Verfahren nach mindestens einem der Ansprüche 2 bis 11, **dadurch gekennzeichnet, dass** man die Mischung nach Verlassen des Extruders in ein Kühlbad entspannt.

13. Verfahren nach mindestens einem der Ansprüche 2 bis 12, **dadurch gekennzeichnet, dass** man die Mischung nach Verlassen des Extruders unter Druck in einen Kühlkanal leitet, und auf diese Weise die Masse abkühlt, so dass diese den Kühlkanal bei Normaldruck verlässt.

14. Verfahren nach mindestens einem der Ansprüche 2 bis 13, **dadurch gekennzeichnet, dass** man die extrudierte Masse in eine stückige Form bringt und zur weiteren Texturierung mindestens einer der beiden folgenden Maßnahmen unterwirft:
(i) Tiefkühlung und Auftauen
(ii) Kochen in Brühe.

15. Verwendung der texturierten Milchproteine nach Anspruch 1 oder der Verfahrensprodukte nach mindestens einem der Ansprüche 2 bis 14 als Nahrungsersatzstoffe.
